# EUROPEAN PATENT SPECIFICATION

(11) **EP 0 449 278 B1**
(45) Date of publication and mention of the grant of the patent: **07.12.1994**
(21) Application number: 91104928.6
(22) Date of filing: 27.03.1991
(51) Int. Cl.: F02F 3/00, F16J 1/22

(54) **Connecting structure of piston and connecting rod**
Verbindungsstruktur einer Kolben- und Pleuelstange
Structure de connexion d'un piston et d'une tige

(30) Priority: 30.03.1990 JP 85663/90; 29.08.1990 JP 226978/90
(43) Date of publication of application: 02.10.1991
(73) Proprietor: Isuzu Motors Limited, Shinagawa-ku, Tokyo 140 (JP)
(72) Inventor: Horiuchi, Shigeaki, 8 Tsuchidana Fujisawa-shi, Kanagawa-ken (JP)
(74) Representative: Goddar, Heinz J., Dr.

(56) References cited:
- DE-A- 3 514 928
- FR-A- 750 666
- GB-A- 442 006
- US-A- 2 260 240
- US-A- 2 720 871
- US-A- 2 757 990

## Description

The present invention relates to a connecting construction between a piston and a connecting rod as set forth in the preamble of claim 1.

An internal combustion engine or an air compressor can, for example, be provided with such a connecting construction.

A height h of a cylinder body of a conventional internal combustion engine is determined according to a dimension p between a crown surface of a piston and an axis of a piston pin, a length l of a connecting rod connected to the piston and a crank arm of a crank chaft (a distance between an axis of the piston pin and an axis b of a axial portion of the arm of the crank chaft), and a length r of the arm of the crank shaft. Accordingly, means for increasing a displacement in a conventional or existing multicylinder internal combustion engine includes one means for increasing the bore of the cylinder and the other means for increasing a stroke 2r of the piston.

According to the aforementioned first means, the thickness of the wall between the cylinders adjacent to each other reduces, and there is a limit in increase of displacement. In the aforementioned second means, the position of the piston pin with respect to the piston is moved upwardly to shorten the dimension p, whereby the arm of the crank shaft is lengthened through that amount. However, in an existing multicylinder internal combustion engine, there is scarecely present allowance in the dimension p between crown surface of the piston and the piston pin (see Japanese Utility Model Application Laid-open No. 64-47958). When the dimension p is shortened, a combustion chamber becomes so shallow that a freedom with respect to the shape of the combustion chamber is restricted, making it difficult to obtain a satisfactory combustion condition.

In view of the foregoing, actually, the height h of the cylinder body or the dimension p of the piston is not changed but the connecting rod is shortened to lengthen the arm of the crank shaft through that amount. However, when the length l of the connecting rod is shortened and the length r of the arm of the crank shaft is lengthened (that is, l/r is decreased), the piston slap become noticeable, resulting in abrasion of the piston ring, increase in slap sound and reduction in fuel cost.

Particularly, in order to fulfill the severe control of exhaust gases in future, an increase in displacement of cylinders of the listing engine is demanded. However, under the aforementioned circumstances, a problem is how displacement is increased without changing the height of the cylinder body in an internal combustion engine.

Further, when a piston is pushed up by a connecting rod, the force acting on the piston from the connecting rod is divided into a component urging the piston upward and a component urging the piston in a lateral direction. Conventionally the shock load of the outer peripheral wall of the piston with respect to the inner peripheral wall of the cylinder resulting from the lateral movement of the piston is not relieved. Thus, problems such as piston slap, frictional loss, noise and abrasion resulting therefrom and the like occur when using a conventional connection construction in, for example, an internal combustion engine or an air compressor.

In FR-A-750 666 a connecting construction as set forth in the preamble of claim 1 is disclosed without the possibility of lateral movement between the piston and the connecting rod.

Bearing and journal assemblies are described in US-A-2 757 990 providing a relative oscillatory movement between the bearing and the journal, for example at the small ends of the connecting rods of internal combustion engines of the piston type. But lateral movements between a gudgeon fixed in the piston and the connecting rod having formed in it a plain concave recess carrying bearing shells are not possible in those assemblies.

Also the piston and connecting cod assembly disclosed in US-A-2 720 871 does not permit a lateral movement between the piston and the connecting rod.

The object of the present invention is to provide a connecting construction between a piston and a connecting rod as set forth in the preamble of claim 1, which overcomes the aforementioned problems. Thus, it is an object of the present invention to reduce piston slap and thereby increase durability as well as service life and reduce frictional loss as well as amount of fuel needed.

According to the present invention the above-mentioned object is achieved by fulfilling the features of claim 1.

Preferred embodiments of the present invention are described by the dependent claims 2 to 8.

The above and other objects, features and advantages of the present invention will become more apparent from the following description taken in conjunction with the accompanying drawings.
- FIG. 1: is a sectional view in front of a connecting construction between a piston and a connecting rod;
- FIG. 2: is a sectional view in side of the connecting construction in Fig. 1;
- FIG. 3: is a sectional view in side of a receiving plate removed from a connecting rod;
- FIG. 4: is a sectional view in side of a connecting rod;
- FIG. 5: is a sectional view in front of a connecting construction between a piston and a connecting rod, according to one embodiment of the present invention;
- FIG. 6: is a bottom view of the connecting construction in Fig. 5;
- FIG. 7: is a sectional view in side of an oil supply to an annular space in a crown portion of the piston;
- FIGS. 8 and 9: are sectional views in front of a connecting construction between a piston and a connecting rod, according to a partly modified embodiment of the present invention, respectively.

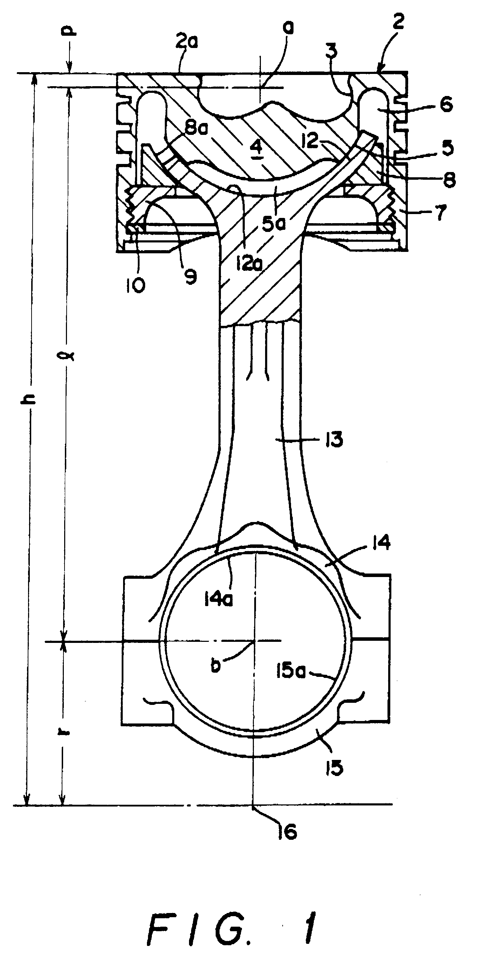

Before discussing preferred embodiments of the present invention a known connecting construction shown in FIGS. 1 to 4 is described in order to facilitate the description of the improvements of the present invention.

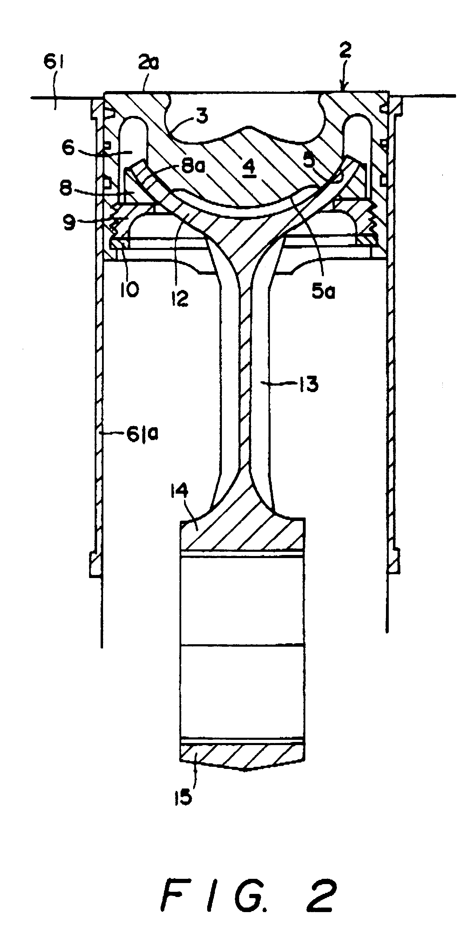

FIG. 1 is a section view in front of a connecting construction between a piston and a connecting rod; and FIG. 2 is a sectional view in side of the same. A piston 2 shown as an example of a Diesel engine is provided with a crown surface 2a thereof with a depression to form a combustion chamber 3, known piston rings being mounted on the outer peripheral wall and a skirt portion 7 being interiorly hollow.

A convex portion 4 provided with a spherical surface extending downwardly is formed in the lower part of a crown portion of a piston 2. The circumference of the convex portion 4 is defined by an annular space 6, which is filled with lubicating oil for cooling or supplied lubricating oil from outside. The spherical convex surface 5 of the convex portion 4 is provided with a depression 5a for holding oil for the purpose of cooling and lubrication. A connecting rod 13 is formed at its extreme end with a bowl-like receiving plate 12. A concave surface 12a in the form of a spherical surface of the receiving plate 12 is slidably engaged with the spherical convex surface 5.

An annular keep member 8 having a concave surface 8a in the form of a spherical surface is placed in contact with the lower part of the receiving plate 12 in order to retain an engagement between the convex portion 4 and the receiving plate 12. The keep member 8 is supported by a retaining tube 9 threadedly engaged with the skirt portion 7. The retaining tube 9 is prevented from being loosened by a stop ring 10 in engagement with the skirt portion 7.

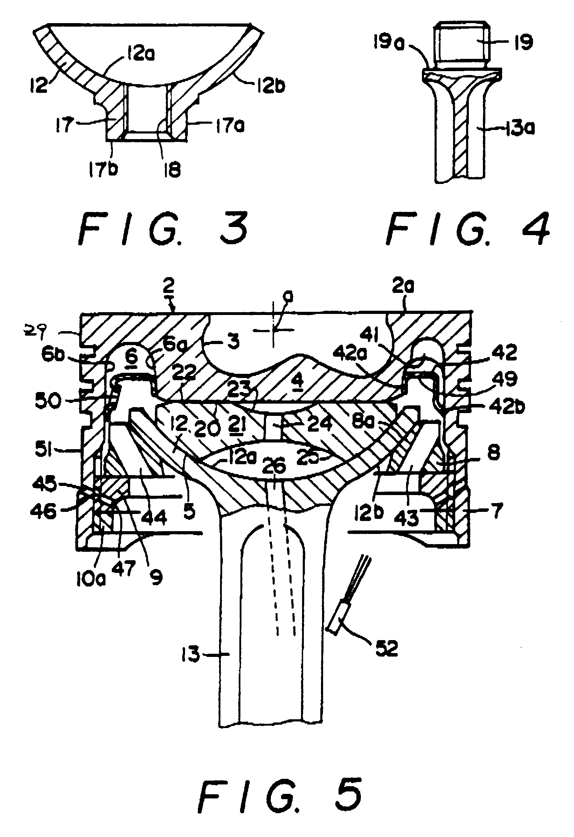

Since the receiving plate 12 is to be mounted to the concave surface 8a of the annular keep member 8, the receiving plate 12 is worked separately from the connecting rod 13, after which they are combined. As shown in FIGS. 3 and 4, a downwardly extending boss portion 17 is formed integral with the center or bottom of the receiving plate 12 which is provided with a concave surface 12a in the form of a spherical surface and a convex surface 12b in the form of a spherical surface, the boss portion 17 being formed with a threaded hole 18. Preferably, the boss portion 17 is formed in its outer peripheral surface with a flat surface 17a having a hexagonal shape in section for engagement of a tool. On the other hand, a body 13a of the connecting rod 13 is integrally formed with a threaded shaft 19 extending in a longitudinal direction from an extreme end surface 19a. As the body 13a is constituted separately from the receiving plate 12, forming of the receiving plate 12 by forging and machining of the concave surface 12a and convex surface 12b become facilitated.

The body 13a and the receiving plate 12 are connected by threadedly engaging the threaded shaft 19 of the body 13a with the threaded hole 18 of the receiving plate 12 and bringing the extreme end surface 19a of the body 13a into contact with the end surface 17b of the boss portion 17 of the receiving plate 12.

As shown in FIGS. 1 and 2, an axial portion or crank pin at the extreme end of an arm of a crank shaft 16 (represented by the center of the shaft) is coupled between a semicircular tubular portion 14a of a base end 14 of the connecting rod 13 and a semicircular tubular portion 15a of a bearing cap 15.

The extreme end of the connecting rod 13 supports the convex portion 4 in the lower part of the crown portion of the piston and can be oscillated when the crank shaft 16 rotates.

The center a of oscillation of the connecting rod 13 is disposed very close to the crown surface 2a. That is, the dimension p between the center a of oscillation and the crown surface 2a is reduced, and if the arm (length r) of the crank shaft 16 is lengthened through that reduced amount, the stroke of the piston 2 is increased, and the displacement is considerably increased without changing the height h of the cylinder body 61.

It is to be noted that if a reduced portion of the dimension p between the crown surface 2a and the center a of oscillation is divided into extentions of the length r of the arm of the crank shaft 16 and the length l of the connecting rod 13, the value of l/r can be maintained as known, and an inclination (the maximum angle of inclination) of the connecting rod 13 in the state where the crank shaft 16 is rotated 1/4 from T.D.C. (top dead center) of the piston 2 can be made as known to suppress the piston slap.

Instead of the above-described connecting construction, where the spherical convex portion 4 of the piston 2 has been supported by the spherical concave portion of the receiving plate 12 at the extreme end of the connecting rod 13, it is also possible that a semi-axial portion (a convex portion having a semicircular shape in section) of the piston may be supported by a concave portion having a semicircular shape in section (a groove having a semicircular shape in section parallel with a crank shaft) of the receiving plate at the extreme end of the connecting rod.

According to the present invention the above described connecting construction can be highly improved by permitting lateral movements between the piston and the connecting rod. Referring to FIGS. 5 to 9 three embodiments of the present invention are described in the following.

In the embodiment of the present invention shown in FIG. 5, a flat upper surface 22 of a sliding member 21 formed of a material having excellent wear resistance and heat conductivity is slidably placed in contact with a flat lower surface 20 of the crown portion of the piston 2. A spherical concave surface 12a of a receiving plate 12 formed at the extreme end of a connecting rod 13 is slidably brought into engagement with a spherical convex surface 5 formed in the lower part of the sliding member 21. The sliding member 21 is provided in its center with a passage 24, said passage 24 having an upper end communicated with a depression 23 of an upper surface 22 and a lower end communicated with a depression 25 of the convex surface 5.

Lubricating oil supplied under pressure from an oil pump to one end of the crank shaft is supplied to the internal passage 26 of the connecting rod 13 via internal passages of the crank shaft, the crank arm and the crank pin. Lubricating oil is supplied from an internal passage 26 of the connecting rod 13 to a chamber between the depression 25 and the concave surface 12a. The lubricating oil lubricates a sliding portion between the upper surface 22 and the lower surface 20 and lubricates a sliding portion between the concave surface 12a and the convex surface 5.

A spherical convex surface 12b formed in the lower part of a receiving plate 12 is slldably supported on a spherical concave surface 8a at the upper part of a cylindrical or annular keep member 8. The keep member 8 comprises, for example, a combination of two divisional sections for the sake of convenience, and is supported slidably in a slight range on the upper surface of a retaining tube 9. The retaining tube 9 is threadedly engaged with the skirt portion 7 and tightened by a lock nut 10a so as not to be loosened.

When the connecting rod 13 is inclined about the oscillating center a (the center of curvature of the concave surface 12a), the piston 2 is pressed down to the sliding member 21 due to the explosion load, the explosion load divided into a longitudinal component acting on the connecting rod 13 and a lateral component acting on the piston 2. When the piston 2 is pushed up by the connecting rod 13, the force acting on the piston 2 from the connecting rod 13 is divided into a component for urging the piston 2 upward and a component for urging the piston in a lateral direction. A relative sliding movement occurs between the lower surface 20 of the piston and the upper surface 22 of the sliding member 21, and at the some time, a relative sliding movement occurs between the lower surface of the keep member 8 and the upper surface of the retaining tube 9. The shock load of the outer peripheral wall of the piston with respect to the inner peripheral wall of the cylinder resulting from the lateral movement of the piston is relieved by the viscous resistance of oil which lubricates the sliding portions.

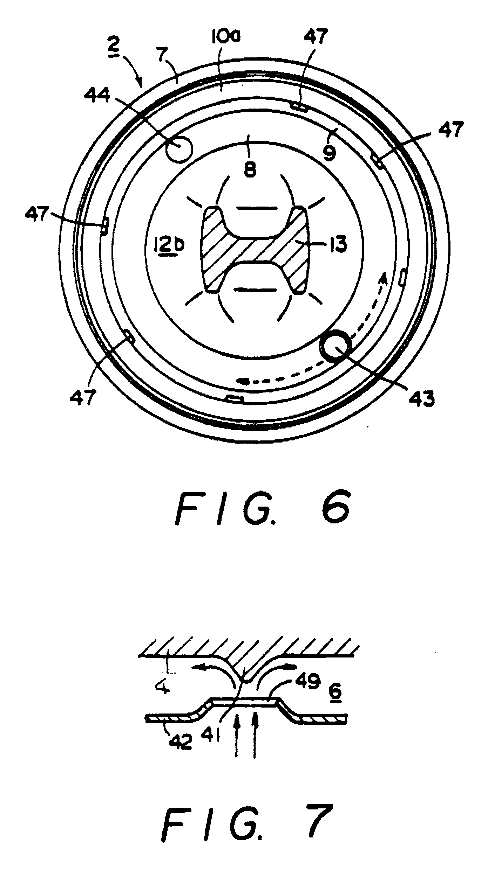

An inlet passage 43 and an outlet passage 44 are disposed peripherally in a spaced relation in the keep member 8 in order that lubricating oil supplied under pressure from an oil pump to an oil jet 52 disposed at the lower end of the cylinder is introduced into the annular space 6 of the crown portion of the piston 2. A flow divide well or branch-flow wall 41 having an inverted triangular shape in section is projected, downwardly from the upper wall of the annular space 6, against the inlet hole 49, as shown in FIG. 7, so that oil is introduced into the annular space 6 and is branched in directions opposite to each other to flow toward an outlet hole 50.

As shown in FIG. 5, an annular partitioning plate 42 having an inverted U-shape in section is disposed in the annular space 6. An inner peripheral portion 42a of the partitioning plate 42 is downwardly curved and resiliently engaged with a peripheral wall of the convex portion 4, that is, an inner peripheral wall 6a of the annular space 6. An outer peripheral portion 42b of the partitioning plate 42 is resiliently engaged with an outer peripheral wall 6b of the annular space 6. The partitioning plate 42 is formed with an inlet hole 49 against the inlet passage 43 and an outlet hole 50 against the outlet passage 44.

Oil jetted out of an oil jet 52 disposed at the lower end of the cylinder impinges upon the branch-flow wall 41 of the annular space 6 via the inlet passage 43 of the keep member 8 and the inlet hole 49 of the partitioning plate 42 and then branched to left and right to flow into the annular space 6. Oil moved half around the annular space 6 above the partitioning plate 42 cools the crown portion of the piston 2, particularly, the peripheral wall of the combustion chamber 3, flows from the outlet hole 50 to the annular apace between the partitioning plate 42 and the keep member 8, and thence flows down into the crank case or the crank chamber via the outlet passage 44 of the keep member 8.

If the partitioning plate 42 is designed to have a downward slope from the inlet hole 49 toward the outlet hole 50 (the surface of the partitioning plate 42 is inclined with respect to the crown surface 2a of the piston), oil well flows to further enhance the cooling effect.

As shown in Fig. 5, a small diameter portion 51 is formed in the lower portion below a groove for receiving an oil scraping ring on the outer peripheral wall of the piston 2 in order that oil scraped off from the inner peripheral wall of the cylinder by the oil scraping ring is guided into the skirt portion 7. A number of inclined passage 45 are provided in a peripherally spaced relation in the small diameter portion 51. The inclined passages 45 are communicated with an annular groove 46 formed in the outer peripheral wall of the retaining tube 9 and communicated with a number of passages 47 provided in the retaning tube 9. Accordingly, the oil scraped off from the inner peripheral wall of the cylinder by the oil scraping ring flows down along the small diameter portion 51 and flows down into the crank case or the crank chamber via the inclined passage 45, the annular groove 46 and the passage 47.

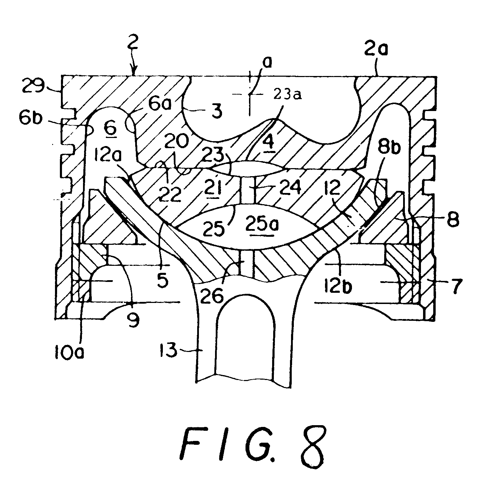

In another embodiment shown in FIG. 8, the center of curvature of the convex surface 5 is located above the sliding member 21, and the radius of curvature thereof is smaller than that of the concave surface 12a of the receiving plate 12, and the convex surface 5 has no common center of curvature. The spherical convex surface 12b has a common center of curvature of the concave surface 12a of the receiving plate 12 and is slidably supported on the upper convex surface 8b of the tubular keep member 8. The center of curvature of the convex surface 8b is located at the lower position and diametrical outer position of the keep member 8. Preferably, the center of curvature of the convex surface 8b lies on an extension of a straight line connecting the oscillating center a with the center of curvature of the convex surface 5.

Further a depression 23a of the otherwise flat surface 20 of the piston 2 is provided opposite the depression 23, as can be seen in FIG. 8.

The concave surface 12a and convex surface 12b of the receiving plate 12 are spherical, and the sliding member 21 and the keep member 8 are constituted as a body of revolution with respect to the center axis of the piston 2.

When the connecting rod 13 oscillates as the reciprocating motion of the piston 2 takes place, the concave surface 12a and convex surface 12b of the receiving plate 12 slidably move in a linear contact with respect to the convex surface 5 of the sliding member 21 and the convex surface 8b of the keep member 8. The sliding portion between the receiving plate 12 and the sliding member 21 is lubricated by lubricating oil from the annular space 6 and lubricating oil from an internal passage 26. The sliding portion between the receiving plate 12 and the keep member 8 is lubricated by lubricating oil from the annular space 6. The contact area between the receiving plate 12 and the sliding member 21 as well as the contact area between the keep member 8 and the receiving plate 12 becomes narrow. When both members slidably move, an oil film is well forced in therebetween due to the squeezing effect whereby the load capacity of the oil film is enhanced.

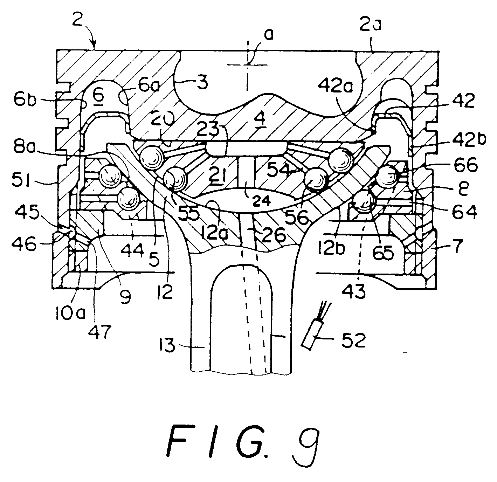

In a further embodiment shown in FIG. 9, a ball bearing is disposed in the sliding member 21 in order to smooth the sliding movement between the sliding member 21 and the receiving plate 12. That is, the convex surface 5 of the sliding member 21 is provided with a number of holes (spherical spaces) 55 so that a ball 56 engaged with each of the holes 55 rolls in contact with the concave surface 12a of the receiving plate 12. A passage 54 extending from a depression 23 to each hole 55 is provided in the sliding member 21 in order to lubricate an engaging portion between the ball 56 and the hole 55.

The concave surface 8a of the keep member 8 is also provided with a number of holes 65 so that a ball 66 is engaged with each hole 65. The balls roll in contact with the convex surface 12b of the receiving plate 12. A passage 64 extending from the outer peripheral surface of the keep member 8 to each hole 65 is provided in the keep member 8 in order to lubricate an engaging portion between the ball 66 and the hole 65.

The center of oscillation of the connecting rod is biased toward the crown surface of the piston as compared with a conventional pin connecting construction, and if the arm of the crank shaft and the connecting rod are lengthened through that bias amount, the stroke of the piston is increased without changing the height of the cylinder body and increasing the maximum angle of inclination of the connecting rod.

Since the heigt of the cylinder body substantially is the same as in prior art devices, there is no increase in cost with respect to the working of the cylinder body.

The displacement is increased due to the increase the stroke of the piston, a proportion occupied by a wastful volume at T.D.C. of the piston is decreased, and measures for exhauset gases can be easily taken.

Since even if the stroke of the piston is increased, the maximum angle of inclination of the connecting rod is not increased, problems such as the piston slap, frictional loss resulting therefrom, abrasion of the piston ring, noises of slap and the like can be avoided.

Since an inertia mass of the piston is small, reduction in slap sound, increase in durability and service life of the piston ring and the cylinder liner, reduction in frictional loss and reduction in the amount of fuel needed can be expected.

Since a surface pressure with respect to an explosion load at the extreme end of the connecting rod is low, this construction is advantageous in terms of high supercharging in an internal combustion engine.

Since the center of oscillation of the piston is near the crown surface subjected to the explosion load, the shock resulting from the oscillation of the piston is relieved to reduce the operating noises.

| REFERENCE LIST | | | |
|---|---|---|---|
| a: | center | 23: | depression |
| b: | center | 23a: | depression |
| h: | height | 24: | passage |
| l: | length | 25: | depression |
| p: | dimention | 25a: | chamber |
| r: | length | 26: | internal passage |
| 1: | --- | 27: | --- |
| 2: | piston | 29: | peripheral wall |
| 2a: | crown surface | 41: | branch-flow wall |
| 3: | Combustion chamber | 42: | partitioning plate |
| 4: | convex portion | 42a: | inner peripheral portion |
| 5: | convex surface | 42b: | outer peripheral portion |
| 5a: | depression | 43: | inlet passage |
| 6: | annular space | 44: | outlet passage |
| 6a: | inner peripheral wall | 45: | inclined passage |
| 6b: | outer peripheral wall | 46: | annular groove |
| 7: | skirt portion | 47: | passage |
| 8: | keep member | 48: | --- |
| 8a: | concave surface | 49: | inlet hole |
| 8b: | convex surface | 50: | outlet hole |
| 9: | retaning tube | 51: | small diameter portion |
| 10: | stop ring | 52: | oil jet |
| 10a: | lock nut | 53: | --- |
| 11: | --- | 54: | passage |
| 12: | recieving plate | 55: | hole |
| 12a: | concave surface | 56: | ball |
| 12b: | convex surface | 57: | --- |
| 13: | connecting rod | 58: | --- |
| 13a: | body | 59: | --- |
| 14: | end/base | 60: | --- |
| 14a: | semicircular tubular portion | 61 | : body |
| 15: | bearing cap | 61a: | liner |
| 15a: | semicircular tubular portion | 62: | --- |
| 16: | crank shaft | 64: | passage |
| 17: | boss portion | 65: | hole |
| 17a: | flat surface | 66: | ball |
| 17b: | end surface | | |
| 18: | threaded hole | | |
| 19: | threaded shaft | | |
| 19a: | extreme end surface | | |
| 20: | lower surface | | |
| 21: | sliding member | | |
| 22: | upper surface | | |

## Claims

1. A connecting construction between
a piston (2) having an upper crown surface (2a) and a lower surface (20) and
a connecting rod (13) with a receiving plate (12) at its extreme end, the receiving plate (12) having a spherical concave upper surface (12a) and a convex lower surface (12b) in engagement with a keep member (8) being supported by a skirt portion (7) of the piston (2)
**characterized** by
a sliding member (21) laterally slidably supporting on the flat part of its upper surface (22) the flat part of the piston's lower surface (20) and having a partially convex lower surface (5) enabling slidable engagement with the concave upper surface (12a) of the receiving plate (12), and
a retaining tube (9) threadedly engaged with the skirt portion (7) and laterally slidably supporting the keep member (8), the upper spherical surface (8a, 8b) of the keep member (8) slidably supporting the receiving plate (12).

2. A connecting construction according to claim 1
**characterized** in that
the sliding member (21) has a depression (25) in the otherwise convex surface (5) and a depression (23) in the otherwise flat surface (22), both being connected by a passage (24) and filled with lubricating oil from an internal passage (26) of the connecting rod (13).

3. A connecting construction according to claim 2,
characterized in that a depression (23a) of the otherwise flat surface (20) of the piston (2) is provided opposite the depression (23).

4. A connecting construction according to any one of the claims 1 to 3, **characterized** in that
an inlet passage (43) and an outlet passage (44) are disposed peripherally in a spaced relation in the keep member (8) in order to introduce lubricating oil supplied from an oil jet (52) arranged at the lower end of the piston (2) into an annular space (6) formed between the crown portion of the piston (2) and the keep member (8).

5. A connecting construction according to any one of the claims 1 to 4, **characterized** in that
a small diameter portion (51) is formed in the lower portion of the cylinder part of the piston (2), below an oil scraping-ring mounting portion of the skirt portion (7), and provided with oil passages (45) communicating via an annular groove (46) in the outer peripheral wall of the retaining tube (9) with oil passages (47) extending from the annular groove (46) to the inner peripheral wall of the retaining tube (9).

6. A connecting construction according to any one of the claims 1 to 5, characterized in that the sliding member (21) is provided with at least one hole (55) and a ball (56) received within each hole (55), each hole (55) being connected through a passage (54) with a depression (23) in the otherwise flat surface (22) and each ball (56) being in contact with the upper surface (12a) of the receiving plate (12).

7. A connecting construction according to any one of the claims 1 to 6, **characterized** in that
the keep member (8) is provided with at least one hole (65) and a ball (66) received within each hole (65), each hole (65) being connected through a passage (64) with the outer peripheral surface of the keep member (8), and each ball (66) being in contact with the lower surface (12b) of the receiving plate (12).

8. Internal combustion engine comprising a connecting construction according to any one of the claims 1 to 7, characterized in that the length r of the arm of the crank shaft (16) of the connecting rod (13) is determined by the curvature of the receiving plate (12) such that it can be lengthened by the amount by which the center a of said curvature is shifted toward the upper crown surface (2a) of the piston (2) without changing the length h of a cylinder body (61) containing the connecting construction.

## Patentansprüche

1. Verbindungsstruktur zwischen einem Kolben (2), der eine obere, dem Verbrennungsraum zugekehrte Seite (2a) und eine untere Seite (20) aufweist, und einer Pleuelstange (13) mit einer Aufnahmeplatte (12) an ihrem äußersten Ende, wobei die Aufnahmeplatte (12) eine kugelförmig konkave, obere Seite (12a) und eine konvexe, untere Seite (12b) aufweist, die in Eingriff mit einem Halteglied (8) ist, das von einem Mantelflächenabschnitt (7) des Kolbens (2) gehalten wird, gekennzeichnet durch ein Gleitelement (21), das sich mit dem flachen Teil seiner oberen Seite (22) seitlich gleitend auf dem flachen Teil der unteren Seite (20) des Kolbens stützt und eine teilweise konvexe, untere Seite (5) aufweist, die einen gleitenden Eingriff mit der konkaven, oberen Seite (12a) der Aufnahmeplatte (12) ermöglicht, und durch ein Stützrohr (9), das über ein Gewinde in den Mantelflächenabschnitt (7) eingreift und seitlich gleitend das Halteglied (8) stützt, wobei die obere, kugelförmige Seite (8a, 8b) des Halteglieds (8) gleitend die Aufnahmeplatte (12) stützt.

2. Verbindungsstruktur nach Anspruch 1, dadurch gekennzeichnet, daß das Gleitelement (21) eine Vertiefung (25) in der im übrigen konvexen Seite (5) und eine Vertiefung (23) in der im übrigen flachen Seite (22) aufweist, wobei beide über einen Durchgang (24) verbunden sind und mit Schmieröl aus einem inneren Durchgang (26) der Pleuelstange (13) gefüllt sind.

3. Verbindungsstruktur nach Anspruch 2, dadurch gekennzeichnet, daß eine Vertiefung (23a) in der im übrigen flachen Seite (20) des Kolbens (2) vorgesehen ist, die der Vertiefung (23) gegenüberliegt.

4. Verbindungsstruktur nach einem oder mehreren der Ansprüche 1 bis 3, dadurch gekennzeichnet, daß ein Einlaßdurchgang (43) und ein Auslaßdurchgang (44) auf einer Umfangslinie mit Abstand zueinander in dem Halteglied (8) angeordnet sind, um das aus einer Öldüse (52), die an dem unteren Ende des Kolbens (2) angeordnet ist, zugeführte Schmieröl in einen ringförmigen Raum (6) einzuleiten, welcher zwischen dem dem Verbrennungsraum zugewandten Abschnitt des Kolbens (2) und dem Halteglied (8) gestaltet ist.

5. Verbindungsstruktur nach einem oder mehreren der Ansprüche 1 bis 4, dadurch gekennzeichnet, daß ein Abschnitt mit kleiner wandstärke (51) in dem unteren Abschnitt des zylinderförmigen Kolbenteils (2), unter einem zu dem Mantelflächenabschnitt (7) gehörenden Befestigungsabschnitt für Ölabstreifringe gestaltet ist und Öldurchgänge (45) darin vorgesehen sind, welche über eine ringförmige Nut (46) in der äußeren Wand des Stützrohres (9) mit Öldurchgängen (47) kommunizieren, die sich von der ringförmigen Nut (46) bis zur inneren Wand des Stützrohres (9) erstrecken.

6. Verbindungsstruktur nach einem oder mehreren der Ansprüche 1 bis 5, dadurch gekennzeichnet, daß in dem Gleitelement (21) wenigstens ein Loch (55) und eine Kugel (56), die von jedem Loch (55) aufgenommen ist, vorgesehen ist, wobei jedes Loch (55) durch einen Durchgang (54) mit einer Vertiefung (23) in der im übrigen flachen Seite (22) verbunden ist und jede Kugel (56) in Berührung mit der oberen Seite (12a) der Aufnahmeplatte (12) ist.

7. Verbindungsstruktur nach einem oder mehreren der Ansprüche 1 bis 6, dadurch gekennzeichnet, daß, in dem Halteglied (8) wenigstens ein Loch (65) und eine Kugel (66), die in jedem Loch (65) aufgenommen ist, vorgesehen ist, wobei jedes Loch (65) durch einen Durchgang (64) mit der äußeren Randseite des Haltegliedes (8) verbunden ist, und jede Kugel (66) in Berührung mit der unteren Seite (12b) der Aufnahmeplatte (12) ist.

8. Innenverbrennungsmotor, der eine Verbindungsstruktur nach einem oder mehreren der Absprüche 1 bis 7 umfaßt, dadurch gekennzeichnet, daß die Länge r des Kurbelwellenarmes (16) der Pleuelstange (13) durch die Krümmung der Aufnahmeplatte (12) in der Weise bestimmt ist, daß sie um den Betrag verlängert werden kann, um den der Mittelpunkt der Krümmung zu der oberen, dem Verbrennungraum zugewandten Seite (2a) des Kolbens (2) verlagert wird, ohne die Länge h des Zylindergehäuses (61), das die Verbindungsstruktur aufnimmt, zu ändern.

## Revendications

1. Construction de liaison entre :
un piston (2) présentant une surface supérieure (2a) bombée et une surface inférieure (20), et
une bielle (13) pourvue à son extrémité d'une plaque de réception (12), la plaque de réception (12) présentant une surface supérieure (12a) concave, sphérique et une surface inférieure (12b) convexe, en contact avec un organe de maintien (8) supporté par une partie jupe (7) du piston (2),
caractérisée par
un organe coulissant (21) supportant, en pouvant coulisser latéralement, sur la partie plane de sa surface supérieure (22), la partie plane de la surface inférieure (20) du piston et présentant une surface inférieure (5) partiellement convexe, permettant un contact coulissant avec la surface supérieure (12a) concave de la plaque de réception (12), et
un tube de maintien (9) en prise par filetage avec la partie jupe (7) et supportant l'organe de maintien (8) en permettant le coulissement latéral, la surface sphérique (8a, 8b) supérieure de l'organe de maintien (8) supportant la plaque de réception (12) en permettant son coulissement.

2. Construction de liaison selon la revendication 1, caractérisée en ce que
l'organe coulissant (21) présente une dépression (25) dans la surface (5) par ailleurs convexe et une dépression (23) dans la surface (22) par ailleurs plane, tous deux étant reliés par un passage (24) et remplis d'huile lubrifiante venant d'un passage intérieur (26) de la bielle (13).

3. Construction de liaison selon la revendication 2, caractérisée en ce qu'une dépression (23a) de la surface (20) par ailleurs plane du piston (2) est prévue à l'opposé de la dépression (23).

4. Construction de liaison selon l'une quelconque des revendications 1 à 3, caractérisée en ce qu'un passage d'entrée (43) et un passage de sortie (44) sont disposés périphériquement en relation espacée dans l'organe de maintien (8), en vue d'introduire de l'huile lubrifiante fournie par une buse d'huile (52), disposée à l'extrémité inférieure du piston (2), dans un espace annulaire (6) formé entre la partie bombée du piston (2) et l'organe de maintien (8).

5. Construction de liaison selon l'une quelconque des revendications 1 à 4, caractérisée en ce qu'une partie à faible diamètre (51) est formée dans la partie inférieure de la partie cylindrique du piston (2), au-dessous d'une partie de montage de bague de raclage d'huile de la partie jupe (7), et pourvue de passages d'huile (45) communiquant via une gorge annulaire (46) ménagée dans la paroi périphérique extérieure du tube de maintien (9), des passages d'huile (47) s'étendant depuis la gorge annulaire (46) vers la paroi périphérique intérieure du tube de maintien (9).

6. Construction de liaison selon l'une quelconque des revendications 1 à 5, caractérisée en ce que l'organe coulissant (21) est pourvu d'au moins un trou (55) et d'une bille (56) logée dans chaque trou (55), chaque trou (55) étant relié par un passage (54) à une dépression (23) ménagée dans la surface (22) par ailleurs plane et chaque bille (56) étant on contact avec la surface supérieure (12a) de la plaque de réception (12).

7. Construction de liaison selon l'une quelconque des revendications 1 à 6, caractérisée en ce que l'organe de maintien (8) est pourvu d'au moins un trou (65) et d'une bille (66) logée dans chaque trou (65), chaque trou (65) étant relié par un passage (64) à la surface périphérique extérieure de l'organe de maintien (8), et chaque bille (66) étant en contact avec la surface inférieure (12b) de la plaque de réception (12).

8. Moteur à combustion interne comprenant une construction de liaison selon l'une quelconque des revendications 1 à 7, caractérisé en ce que la longueur r du bras du Vilebrequin (16) de la bielle (13) est déterminée par l'incurvation de la plaque de réception (12), de manière qu'elle puisse être augmentée de la distance par laquelle le centre a de ladite incurvation est décalé vers la surface supérieure bombée (2a) du piston (2), sans modifier le longueur h d'un corps cylindrique (61) contenant la construction de liaison.
